# EUROPÄISCHE PATENTSCHRIFT

(11) **EP 2 882 273 B1**
(45) Veröffentlichungstag und Bekanntmachung des Hinweises auf die Patenterteilung: **28.03.2018**
(21) Anmeldenummer: 13759423.0
(22) Anmeldetag: 01.08.2013
(51) Int. Cl.: A01B 63/26, A01B 49/02

(54) **BODENBEARBEITUNGSGERÄT MIT EINER EINRICHTUNG ZUM AUFSTAUEN, AUFFANGEN ODER BEARBEITEN VON ERDREICH ODER MULCH**
SOIL CULTIVATION DEVICE HAVING A DEVICE FOR STACKING, COLLECTING OR CULTIVATING SOIL OR MULCH
OUTIL POUR LE TRAVAIL DU SOL COMPRENANT UN DISPOSITIF DE PRODUCTION D'UN REMOUS, DE COLLECTE OU DE TRAVAIL DE TERRE OU DE PAILLIS

(30) Priorität: 11.08.2012 DE 102012016348
(43) Veröffentlichungstag der Anmeldung: 17.06.2015
(73) Patentinhaber: Lemken GmbH & Co. KG, 46519 Alpen (DE)
(72) Erfinder: PAULESSEN, Georg, 47877 Willich (DE); ACHTEN, Georg, 47918 Tönisvorst (DE); KARSTEN, Sebastian, 46509 Xanten-Lüttingen (DE); MAAS, Ludger, 47665 Sonsbeck (DE); HAPPE, Christoph, 46519 Alpen (DE)
(74) Vertreter: Schulte & Schulte
(86) Internationale Anmeldenummer: PCT/DE2013/000425
(87) Internationale Veröffentlichungsnummer: WO 2014/026665

(56) Entgegenhaltungen:
- EP-A2- 1 310 145
- DE-U1- 8 119 215
- DE-U1-202007 016 639
- US-A- 1 351 850
- US-A- 2 351 172

## Beschreibung

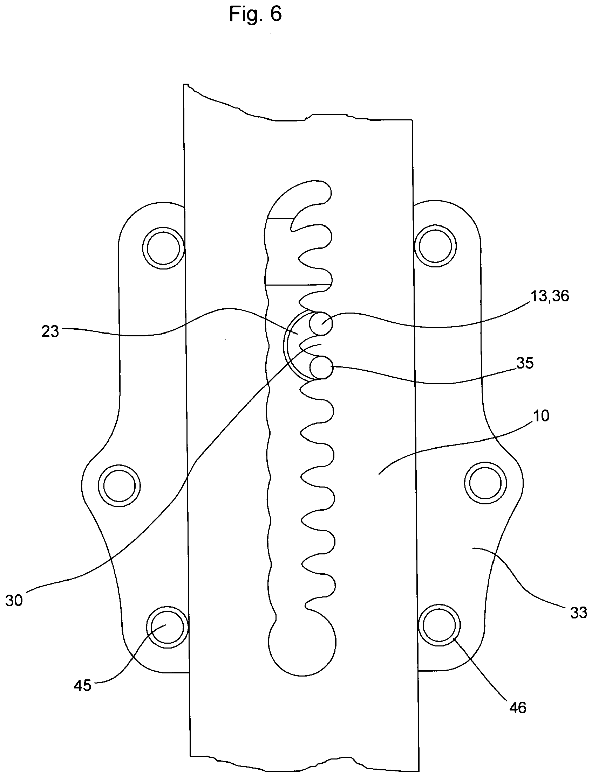

Die Erfindung bezieht sich auf ein Bodenbearbeitungsgerät gemäß dem Oberbegriff der Patentansprüche 1 und 2. Ein derartiges Bodenbearbeitungsgerät ist zum Beispiel dem deutschen Gebrauchsmuster G 8119215 zu entnehmen, bei dem die Figur 6 eine zentral verstellbare Einrichtung mit zwei Stelleinrichtungen zeigt und mit zwei Winkelgetrieben, die über eine Querwelle miteinander verbunden sind. Über ein Handrad werden die Spindeln der beiden Stelleinrichtungen so verstellt, dass die Einrichtung in die gewünschte Arbeitsposition gebracht wird.

Diese Ausführung ist sehr aufwendig und nicht wartungsfrei. Die gewählte Arbeitsposition kann sich während des Arbeitseinsatzes verändern, wenn keine zusätzlichen Sicherungsmittel vorgesehen werden. Einstellungen über Spindeln sind zum einen sehr zeitintensiv und zum anderen kann bei Veränderungen der Arbeitsposition eine zuvor gewählte Arbeitsposition nur schwer wieder eingenommen werden. Dies kann nur durch Zählen der Spindelumdrehungen gewährleistet werden. Zumindest theoretisch kann die linke und rechte Arbeitsposition nicht links und rechts gleich eingestellt werden, weil abhängig von der Reibung in den Führungen der Einrichtung die Verwindung in der Querwelle dies nicht gewährleisten kann. Das deutsche Gebrauchsmuster DE 20 2007 016 639 U1 zeigt ein Reitbodenpflegegerät, bei dem zwei Pflughälften entlang einer Führungsschiene mit Stellmitteln lösbar fixiert werden.

Ein weiteres Bodenbearbeitungsgerät ist dem Prospekt der Kreiseleggen Zirkon der Anmelderin zu entnehmen, mit dem Druckvermerk LEMKEN 02/12 175 0037/de. Dort wird auf der 12. Innenseite ein Planierbalken zur Regulierung des Erdstroms als Einrichtung gezeigt, bei der die Zahnräder über eine Querwelle mit Zahnrädern direkt in Zahnsegmente eingreifen und durch Drehen der Querwelle die Arbeitsposition der beiden Einstelleinrichtungen der Einrichtung verändert wird. Die Querwelle weist dazu einen Sechskant auf, mit dem z.B. mit einem Maul- oder Ringschlüssel die Querwelle gedreht werden kann. Die jeweilige Arbeitsposition wird durch einen Steckstift gesichert. Diese Version ist zwar einfach aufgebaut, aber auch hier gilt zum Teil der theoretische Fall, dass eine Verwindung der Querwelle eine absolut identische Einstellung der linken und rechten Arbeitsposition der Einrichtung nicht ermöglicht. Zusätzlich muss die eingestellte Arbeitsposition mittels Steckstift gesichert werden. Ein Abrutschen des Maul- oder Ringschlüssels verursacht ein Absenken der Einrichtung in seine tiefste Arbeitsposition.

Aufgabe der Erfindung ist es, eine Einrichtung zu schaffen, die einfach aufgebaut ist, die weitestgehend wartungsfrei ist, die einfach zu bedienen ist und bei der ein möglicherweise gefährliches Absenken der Einrichtung bei Fehlbedienungen sicher vermieden wird.

Erfindungsgemäß wird die Aufgabe nach den Merkmalen der Ansprüche 1 und 2 gelöst, wobei in den weiteren Patentansprüchen in vorteilhafter Weise ergänzende und alternative Lösungen beansprucht werden.

Dadurch, dass durch das kettengliedartige Ritzel ein Zahnrad mit zwei Profilzähnen gebildet wird, verändert sich beim Drehen des kettengliedartigen Ritzels zwangsläufig der Abstand zwischen dem Zahnsegment und der Achse des kettengliedartigen Ritzels. Das kettengliedartige Ritzel oder das Lager des kettengliedartigen Ritzels müssen praktisch nachgebbar angeordnet sein. Um eine sichere Funktion der Stelleinrichtung sicher zu stellen, sind Mittel vorgesehen, die das kettengliedartige Ritzel in Eingriff halten. Diese Mittel sorgen dafür, dass das nachgebende Teil, entweder das kettengliedartige Ritzel oder das Lager, wieder zurückgeführt wird, zum Beispiel durch Schwerkraft oder durch eine entsprechende Schrägstellung der Zähne des Zahnsegmentes. Denkbar ist auch, das Zahnsegment nachgebbar zu gestalten, was ein Nachgeben des kettengliedartigen Ritzels oder des Lagers nicht mehr erforderlich macht. Mit kettengliedartigen Ritzel ist letztendlich auch ein spezielles Zahnrad mit zwei Zähnen ähnlich einer Triebstockverzahnung gemeint, das mit beiden Zähnen gleichzeitig mit einer Verzahnung in Eingriff stehen kann, die wiederum mit einem ihrer Zähne zwischen die beiden Zähne des speziellen Zahnrades eingreift.

Eine alternative Ausführungsform der Erfindung ist die, bei der das Zahnsegment dem Bodenbearbeitungsgerät und das Lager der Einrichtung zugeordnet ist.

Diese Ausführungsform ist dann vorteilhaft, wenn es zum Beispiel aus baulichen Gründen nicht optimal möglich ist, das Zahnsegment zum Bestandteil der Einrichtung und das Lager zum Bestandteil des Bodenbearbeitungsgerätes zu machen.

Es ist weiterhin vorteilhaft vorgesehen, wenn die Mittel als Energiespeicher ausgebildet sind. Das Vorsehen von Energiespeichern vereinfacht die Ausführungsform der Stelleinrichtungen, da auch einfache Zahnformen am Zahnsegment eingesetzt werden können und auf besonders geformte oder schräg gestellte Zahnformen verzichtet werden kann.

Eine vorteilhafte Ausführungsform der Erfindung ist die, bei der der Energiespeicher als Zug-, Druck- oder Blattfeder ausgebildet ist. Einfache Energiespeicher wie Zugfedern oder Blattfedern können ohne großen Aufwand in das System integriert werden und sind letztendlich auch wartungsfrei.

Vorteilhaft ist weiter vorgesehen, dass die Stelleinrichtungen über eine Verbindungsstange miteinander verbunden sind. Das Vorsehen einer Verbindungsstange kann ohne Nachteile umgesetzt werden, da in der jeweiligen Rastposition die Verbindungsstange nicht auf Torsion belastet wird. Wenn das kettengliedartige Ritzel durch eine Feder in Rastposition gehalten wird, wird eine Totpunktlage zwischen den Zähnen des Zahnsegmentes und dem kettengliedartigen Ritzel erreicht. Ohne zusätzliche Sicherungsmittel wird die Einrichtung so in ihrer Arbeitsstellung fixiert.

Eine weitere vorteilhafte Ausführungsform der Erfindung ist die, bei der das Bodenbearbeitungsgerät einklappbar ausgebildet ist und aus mehreren Geräteeinheiten mit mindestens einer linken Geräteeinheit und mindestens einer rechten Geräteeinheit besteht, jede Geräteeinheit mindestens zwei Stelleinrichtungen aufweist, die einstelltechnisch miteinander verbunden sind.

Einklappbare Bodenbearbeitungsgeräte bestehen aus mehreren Geräteeinheiten, die für sich betrachtet so separat einfach zentral eingestellt werden können.

Eine bevorzugte Ausführungsform der Erfindung ist die, dass das Bodenbearbeitungsgerät einklappbar ausgebildet ist und aus mehreren Geräteeinheiten mit Stelleinrichtungen besteht, wobei alle Stelleinrichtungen in Arbeitsstellung so miteinander verbunden sind, dass sie gemeinsam über ein Stellteil in der Arbeitsstellung einstellbar sind. Die Stelleinrichtungen der einzelnen Geräteeinheiten sind miteinander verbunden und können gemeinsam zentral betätigt werden. Diese Ausführungsform kann vorteilhaft bei leichten Einrichtungen eingesetzt werden. Für schwere Einrichtungen sind Stelleinrichtungen vorzusehen, die zumindest motorisch oder durch Energiespeicher unterstützt sind, wenn per Hand zu viel Kraft erforderlich wird.

Weitere Einzelheiten der Erfindung sind den Figuren und der Figurenbeschreibung zu entnehmen. Es zeigen:
- Figur 1: ein Bodenbearbeitungsgerät mit gewölbten Hohlscheiben und mit den Hohlscheiben nachgeordneten Einrichtungen,
- Figur 2: eine Stelleinrichtung der Einrichtung im gesicherten Zustand,
- Figur 3: Stelleinrichtungen mit einer zum Teil freigestellten Stelleinrichtung im gesicherten Zustand,
- Figur 4: die Innenseite einer Stelleinrichtung,
- Figur 5: Stelleinrichtungen mit einer zum Teil frei gestellten Stelleinrichtung während eines Einstellvorganges und
- Figur 6: eine Funktionsskizze der Stelleinrichtung im gesicherten Zustand.

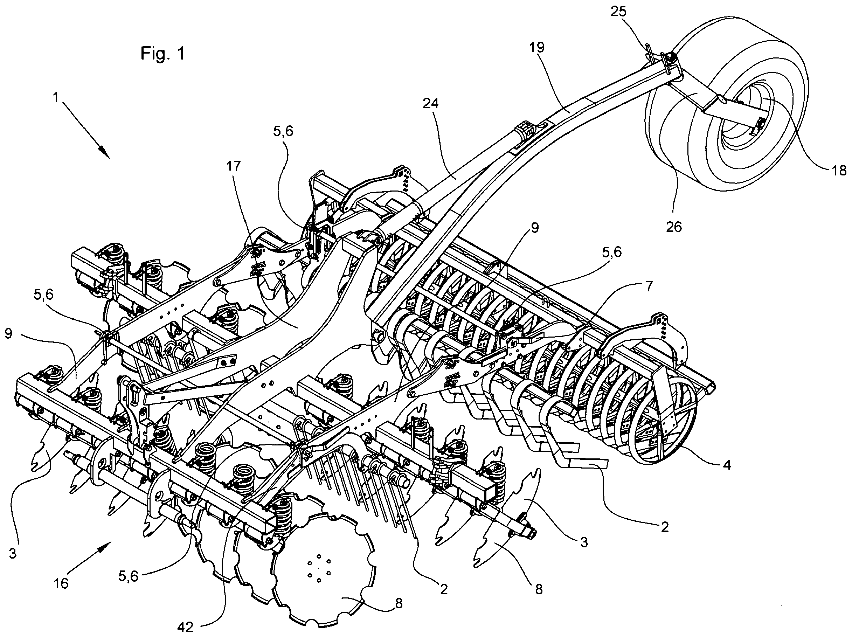

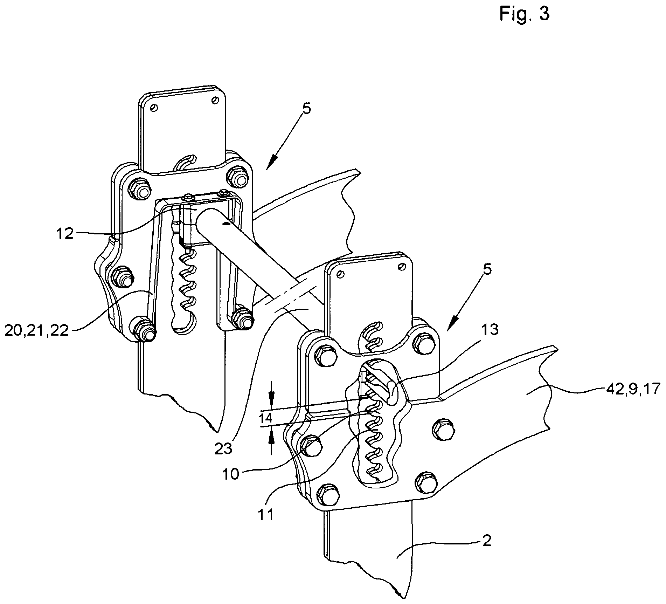

Figur 1 zeigt ein Bodenbearbeitungsgerät 1 mit Werkzeugen 3, mit Einrichtungen 2 und mit einer Nachlaufwalze 4. Als Werkzeuge 3 sind hier gewölbte Scheiben 8 vorgesehen, die in zwei Reihen am Grundrahmen 17 angeordnet sind. Hinter der ersten Reihe 38 sind leichte Bodenführungsstriegel 39 als Einrichtung 2 vorgesehen, hinter der zweiten Reihe 40 sind dagegen schwere Bodenführungsstriegel 41 als Einrichtung 2 vorgesehen, die aufgeworfenes Erdreich auffangen und gezielt ablegen. Die Bodenführungsstriegel 39 und 41 sind in der Höhe einstellbar und unterschiedlich schwer. Die leichten Bodenführungsstriegel 39 können über eine Schwinge 42 übersetzt über die Stelleinrichtung 5 mit dem Stellteil 7 verstellt werden. Die schweren Bodenführungsstriegel 41 werden hier linear vertikal ohne Übersetzung über das Stellteil 7 der Stelleinrichtung 5 verstellt. Das Bodenbearbeitungsgerät 1 weist vorne den Dreipunkturm 16 auf, mit dem das Bodenbearbeitungsgerät 1 mit dem Dreipunktgestänge eines Traktors angebaut werden kann. Der Dreipunkturm 16 steht mit dem Grundrahmen 17 in Verbindung, der auch die Träger 9 aufnimmt. Die Träger 9 sind hier durchgehend und mehrteilig ausgebildet, sie können auch als auskragende Träger 43 ausgebildet sein, was zum Beispiel auch den Figuren 3, 4 und 5 zu entnehmen ist. Am Grundrahmen 17 befindet sich auch der Tragarm 19, der das Stützrad 18 trägt. Das Stützrad 18 ist mit seiner Radgabel 26 um die annähernd senkrecht stehende Spornachse 25 frei schwenkbar. Über den Hydraulikzylinder 24 kann das Stützrad 18 für die Arbeit ausgehoben werden. Während der Kehrfahrt auf dem Vorgewende und für den Transport wird das Bodenbearbeitungsgerät 1 vom Stützrad 18 getragen, das über den Hydraulikzylinder 24 entsprechend ausgehoben oder abgesenkt wird.

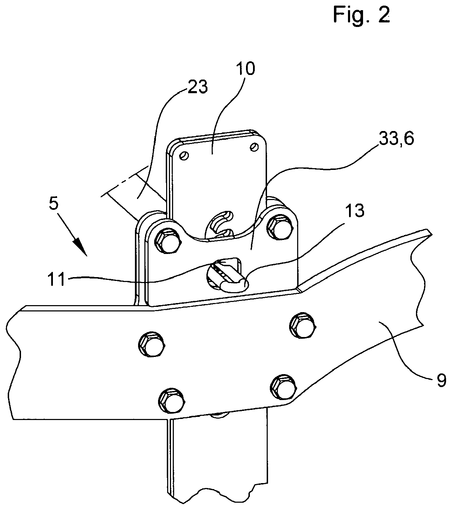

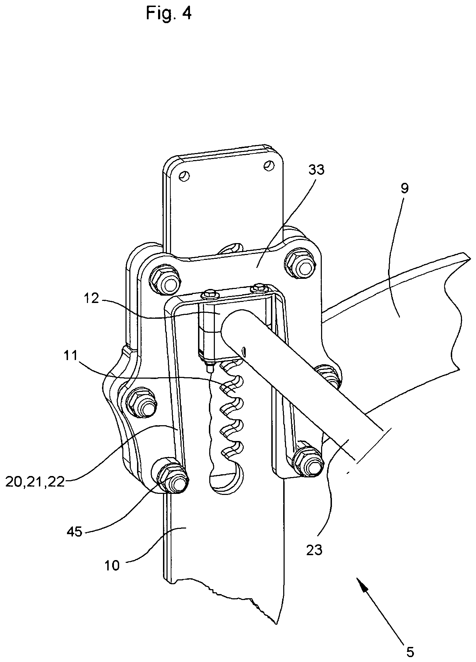

Figur 2 zeigt eine Stelleinrichtung 5 der Einrichtung 2 im gesicherten Zustand. Am Träger 9 ist die Konsole 33 befestigt, in der das Zahnsegment 10 geführt angeordnet ist. Die Konsole 33 bildet mit den benachbarten Bauteilen eine Befestigungseinrichtung 6, mit der die Einrichtung 2 am Bodenbearbeitungsgerät 1 angebaut werden kann. Am Zahnsegment 10 ist die nicht dargestellte Einrichtung 2 angeordnet. Die Stelleinrichtung 5 besteht hier aus dem linear und vertikal verstellbaren Zahnsegment 10 mit den Zähnen 11 und dem kettengliedartigen Ritzel 13, das horizontal nachgebbar in einem Lager 12 geführt mit der Konsole 33 verbunden ist, was insbesondere der Figur 4 zu entnehmen ist. Das kettengliedartige Ritzel 13 liegt mit seinen Profilzähnen 36 auf den Zahnfüßen 35 der benachbarten Zähne 11 des Zahnsegments auf, was insbesondere der Figur 6 zu entnehmen ist und wird in diesem gesicherten Zustand automatisch durch die Federkraft der Blattfeder 22 in Eingriff gehalten, was der Figur 4 zu entnehmen ist.

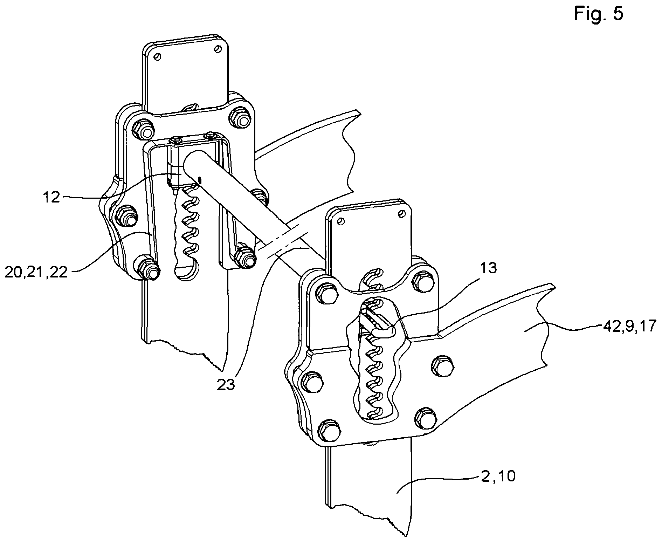

In Figur 3 sind die Stelleinrichtungen mit einer zum Teil freigestellten Stelleinrichtung im gesicherten Zustand dargestellt. Dies verdeutlicht den Eingriff des kettengliedartigen Ritzels 13 gemäß Figur 2 in das Zahnsegment 10. Figur 3 verdeutlicht auch wie die Figur 5, dass pro Einrichtung 2 zwei Stelleinrichtungen 5 vorgesehen sind. Die durchgehende Verbindungsstange 23, die ein zentrales Verstellen beider Stelleinrichtungen 5 ermöglicht, ist hier der Einfachheit halber unterbrochen dargestellt. Der Träger 9 ist hier als auskragender Träger 43 dargestellt, der mittelbar mit dem Grundrahmen 17 in Verbindung steht oder auch Teil des Grundrahmens 17 sein kann.

Figur 4 zeigt die Innenseite einer Stelleinrichtung 5 mit Lager 12 und Blattfeder 22. Im Lager 12 ist die Verbindungsstange 23 horizontal beweglich, aber vertikal fixiert gelagert und damit auch das kettengliedartige Ritzel, das endseitig an der Verbindungsstange 23 angeordnet ist. Das Lager 12 mit der Verbindungsstange 23 und dem kettengliedartigen Ritzel 13 wird durch die vorgespannte Blattfeder 22 in Richtung der Zähne 11 des Zahnsegmentes 10 gedrückt. Das kettengliedartige Ritzel 13 greift dadurch mit seinen Profilzähnen 36 in die Zähne 11 des Zahnsegmentes 10 so ein, wie es die Figuren 2 und 3 verdeutlichen. Es befindet sich dann im gesicherten Zustand und wirkt quasi selbsthemmend. Separate Sicherungsmittel sind nicht erforderlich, da sich das kettengliedartige Ritzel 13 in Totpunktstellung befindet, was insbesondere der Figur 6 zu entnehmen ist.

Während eines Einstellvorganges zeigt Figur 5 eine zum Teil frei gestellte Stelleinrichtung 5. Das kettengliedartige Ritzel 13 befindet sich hier in einer um 90° verdrehten Stellung in Relation zur gesicherten Stellung gemäß Figur 2. Dabei wird das kettengliedartige Ritzel 13 nebst Lager 12 etwa um den halben Abstand des Zahnabstandes 14 der Zähne 11 horizontal gegen die Federkraft der Blattfeder 22 verschoben. Würde man mit dem nicht dargestellten Stellteil 7 abrutschen, könnte sich das Zahnsegment 10 nur um maximal einen Zahnabstand 14 der Zähne 11 verstellen und sich danach wieder in einer gesicherten Stellung befinden.

Figur 6 zeigt eine Funktionsskizze der Stelleinrichtung 5 im gesicherten Zustand. Sie verdeutlicht auch, wie das Zahnsegment 10 in der Konsole 33 mittels der Schrauben 45 und Buchsen 46 linear geführt wird. Der Abstand der beiden Profilzähne 36 zueinander entspricht ungefähr dem Zahnabstand 14 der Zähne 11 zueinander des Zahnsegmentes 10. Die gedachte Mittelachse 30 des kettengliedartigen Ritzels befindet sich im Bereich der Zähne 11 des Zahnsegments 10. Die Profilzähne 36 des kettengliedartigen Ritzels 13 liegen auf den Zahnfüßen 35 auf und werden durch die nicht dargestellte Blattfeder 22 in dieser Position gehalten. Bei einer Verdrehung der Stange 23 und damit des kettengliedartigen Ritzels 13 um 90° verlagert sich die gedachte Mittelachse 30 des kettengliedartigen Ritzels um den halben Abstand der beiden Profilzähne 36 zueinander. Um dieses Maß muss auch das Lager 12 mit Verbindungsstange 23 horizontal nachgebbar sein.

## Patentansprüche

1. Bodenbearbeitungsgerät (1) mit einer Einrichtung (2) zum Aufstauen, Auffangen oder Bearbeiten von Erdreich oder Mulch, das von den Werkzeugen (3) des Bodenbearbeitungsgerätes (1) oder von einer Nachlaufwalze (4) aufgeworfen oder bearbeitet wird, wobei die Einrichtung (2) mindestens zwei miteinander verbundene Stelleinrichtungen (5) aufweist, die über Stellteile (7) zentral einstellbar sind,
**dadurch gekennzeichnet,**
**dass** die jeweilige Stelleinrichtung (5) ein Zahnsegment (10) mit mehreren Zähnen (11) aufweist, in die ein in einem Lager (12) drehbar gelagertes kettengliedartiges Ritzel (13) mit zwei Profilzähnen (36) eingreift, wobei das Lager (12) derart verschiebbar oder verschwenkbar geführt ist, dass bei einer Drehung des kettengliedartigen Ritzels (13) um 180° das Zahnsegment (10) um einen Zahnabstand (14) versetzt und das Lager (12) um etwa den halben Zahnabstand (15) hin und her bewegt wird und dass Mittel (20) vorgesehen sind, die das kettengliedartige Ritzel (13) oder das Lager (12) in Richtung des Zahnsegmentes (10) zurückführen, wobei das Zahnsegment (10) Bestandteil der Einrichtung (2) und das Lager (12) Bestandteil des Bodenbearbeitungsgerätes (1) ist.

2. Bodenbearbeitungsgerät (1) mit einer Einrichtung (2) zum Aufstauen, Auffangen oder Bearbeiten von Erdreich oder Mulch, das von den Werkzeugen (3) des Bodenbearbeitungsgerätes (1) oder von einer Nachlaufwalze (4) aufgeworfen oder bearbeitet wird, wobei die Einrichtung (2) mindestens zwei miteinander verbundene Stelleinrichtungen (5) aufweist, die über Stellteile (7) zentral einstellbar sind,
**dadurch gekennzeichnet,**
**dass** die jeweilige Stelleinrichtung (5) ein Zahnsegment (10) mit mehreren Zähnen (11) aufweist, in die ein in einem Lager (12) drehbar gelagertes kettengliedartiges Ritzel (13) mit zwei Profilzähnen (36) eingreift, wobei das Lager (12) derart verschiebbar oder verschwenkbar geführt ist, dass bei einer Drehung des kettengliedartigen Ritzels (13) um 180° das Zahnsegment (10) um einen Zahnabstand (14) versetzt und das Lager (12) um etwa den halben Zahnabstand (15) hin und her bewegt wird und dass Mittel (20) vorgesehen sind, die das kettengliedartige Ritzel (13) oder das Lager (12) in Richtung des Zahnsegmentes (10) zurückführen, wobei das Zahnsegment (10) dem Bodenbearbeitungsgerät (1) und das Lager (12) der Einrichtung (2) zugeordnet ist.

3. Bodenbearbeitungsgerät nach Anspruch 1,
**dadurch gekennzeichnet,**
**dass** die Mittel (20) als Energiespeicher (21) ausgebildet sind.

4. Bodenbearbeitungsgerät nach Anspruch 3,
**dadurch gekennzeichnet,**
**dass** der Energiespeicher (21) als Zug-, Druck- oder Blattfeder (22) ausgebildet ist.

5. Bodenbearbeitungsgerät nach Anspruch 1,
**dadurch gekennzeichnet,**
**dass** die Stelleinrichtungen 5 über eine Verbindungsstange (23) miteinander verbunden sind.

6. Bodenbearbeitungsgerät nach Anspruch 1,
**dadurch gekennzeichnet,**
**dass** das Bodenbearbeitungsgerät (1) einklappbar ausgebildet ist und aus mehreren Geräteeinheiten mit mindestens einer linken Geräteeinheit und mindestens einer rechten Geräteeinheit besteht, wobei jede Geräteeinheit mindestens zwei Stelleinrichtungen (5) aufweist, die einstelltechnisch miteinander verbunden sind.

7. Bodenbearbeitungsgerät nach Anspruch 1,
**dadurch gekennzeichnet,**
**dass** das Bodenbearbeitungsgerät (1) einklappbar ausgebildet ist und aus mehreren Geräteeinheiten mit Stelleinrichtungen (5) besteht, wobei alle Stelleinrichtungen (5) in Arbeitsstellung so miteinander verbunden sind, dass sie gemeinsam über ein Stellteil in der Arbeitsstellung einstellbar sind.

## Claims

1. Soil tillage implement (1) with a device (2) for piling up, collecting or handling earth or mulch that is thrown up or worked by the tools (3) of the soil tillage implement (1) or by a trailing roller (4), whereby the device (2) has at least two actuators (5) connected to each other, which can be adjusted centrally by controls (7),
**characterised in that**
the respective actuator (5) has a toothed segment (10) with several teeth (11), into which a chain-link type pinion (13) with two profile teeth (36) pivoted in a bearing (12) meshes, whereby the bearing (12) can be slid or swivelled in such a way that with a turn of the chain link type pinion (13) by 180° the toothed segment (10) is displaced by a tooth distance (14) and the bearing (12) is moved to and for by about a half tooth distance (15) and that means (20) are provided that lead the chain link type pinion (13) or the bearing (12) back in the direction of the toothed segment (10), whereby the toothed segment (10) is a component of device (2) and the bearing (12) is a component of the soil tillage implement (1).

2. Soil tillage implement (1) with a device (2) for piling up, collecting or handling earth or mulch that is thrown up or worked by the tools (3) of the soil tillage implement (1) or by a trailing roller (4), whereby the device (2) has at least two actuators (5) connected to each other, which can be adjusted centrally by controls (7),
**characterised in that**
the respective actuator (5) has a toothed segment (10) with several teeth (11), into which a chain link type pinion (13) with two profile teeth (36) pivoted in a bearing (12) meshes, whereby the bearing (12) can be slid or swivelled in such a way that with a turn of the chain link type pinion (13) by 180° the toothed segment (10) is displaced by a tooth distance (14) and the bearing (12) is moved to and for by about a half tooth distance (15) and that means (20) are provided that lead the chain link type pinion (13) or the bearing (12) back in the direction of the toothed segment (10), whereby the toothed segment (10) is a component of the tillage implement (1) and the bearing (12) of the device (2).

3. Soil tillage implement in accordance with claim 1,
**characterised in that**
that the means (20) are designed as an energy store (21).

4. Soil tillage implement in accordance with claim 3,
**characterised in that**
that the energy store (21) is designed as a tension spring, compression spring or leaf spring (22).

5. Soil tillage implement in accordance with claim 1,
**characterised in that**
that the actuators (5) are connected to each other by a connecting rod (23).

6. Soil tillage implement in accordance with claim 1,
**characterised in that**
that the soil tillage implement (1) is designed to be foldable and consists of several assembly units with at least one left assembly unit and at least one right assembly unit, whereby each assembly unit has at least two actuators (5) that are linked to each other for adjusting purposes.

7. Soil tillage implement in accordance with claim 1,
**characterised in that**
that the soil tillage implement (1)) is designed to be fold- able and consists of several assembly units with actuators (5), whereby all actuators (5) are linked to each other in the working position in such a way that they can be adjusted jointly via a control in the working position.

## Revendications

1. Engin de travail du sol (1) avec un dispositif (2) pour l'accumulation, la collecte ou et le travail de la terre ou d'un paillis, qui est soulevé ou travaillé par les outils (3) de l'engin de travail du sol (1) ou un rouleau suiveur (4), le dispositif (2) comprenant au moins deux dispositifs de réglage (5) reliés entre eux, qui peuvent être réglés de manière centralisée par l'intermédiaire de pièces de réglage (7),
**caractérisé en ce que**
le dispositif de réglage (5) comprend un segment denté (10) avec plusieurs dents (11), dans lesquelles s'emboîte un pignon (13), en forme d'un maillon de chaîne, logé de manière rotative dans un palier (12), avec deux dents profilées (36), le palier (12) étant guidé de manière mobile ou pivotante de façon à ce que, lors d'une rotation du pignon (13) en forme de maillon de chaîne de 180°, le segment denté (10) soit décalé d'une distance entre les dents (14) et le palier (12) soit déplacé avec un mouvement de va-et-vient d'environ la moitié de la distance entre les dents (15) et **en ce que** des moyens (20) sont prévus, qui guident le retour du pignon (13) en forme de maillon de chaîne ou le palier (12) en direction du segment denté (10), le segment denté (10) faisant partie du dispositif (2) et le palier (12) faisant partie de l'engin de travail du sol (1).

2. Engin de travail du sol (1) avec un dispositif (2) pour l'accumulation, la collecte ou et le travail de la terre ou d'un paillis, qui est soulevé ou travaillé par les outils (3) de l'engin de travail du sol (1) ou un rouleau suiveur (4), le dispositif (2) comprenant au moins deux dispositifs de réglage (5) reliés entre eux, qui peuvent être réglés de manière centralisée par l'intermédiaire de pièces de réglage (7),
**caractérisé en ce que**
le dispositif de réglage (5) comprend un segment denté (10) avec plusieurs dents (11), dans lesquelles s'emboîte un pignon (13), en forme d'un maillon de chaîne, logé de manière rotative dans un palier (12), avec deux dents profilées (36), le palier (12) étant guidé de manière mobile ou pivotante de façon à ce que, lors d'une rotation du pignon (13) en forme de maillon de chaîne de 180°, le segment denté (10) soit décalé d'une distance entre les dents (14) et le palier (12) soit déplacé avec un mouvement de va-et-vient d'environ la moitié de la distance entre les dents (15) et **en ce que** des moyens (20) sont prévus, qui guident le retour du pignon (13) en forme de maillon de chaîne ou le palier (12) en direction du segment denté (10), le segment denté (10) correspondant à l'engin de travail du sol (1) et le palier (12) correspondant au dispositif (2).

3. Engin de travail du sol selon la revendication 1,
**caractérisé en ce que**
les moyens (20) sont conçus comme des accumulateurs d'énergie (21).

4. Engin de travail du sol selon la revendication 3,
**caractérisé en ce que**
l'accumulateur d'énergie (21) est conçu comme un ressort de traction de compression ou à lames (22).

5. Engin de travail du sol selon la revendication 1,
**caractérisé en ce que**
les dispositifs de réglage (5) sont reliés entre eux par l'intermédiaire d'une tige de liaison (23).

6. Engin de travail du sol selon la revendication 1,
**caractérisé en ce que**
l'engin de travail du sol (1) est conçu de manière pliable et est constitué de plusieurs unités avec au moins une unité gauche et au moins une unité droite, chaque unité comprenant au moins deux dispositifs de réglage (5), qui sont reliées entre elles pour le réglage.

7. Engin de travail du sol selon la revendication 1,
**caractérisé en ce que**
l'engin de travail du sol (1) est conçu de manière pliable et est constitué de plusieurs unités avec des dispositifs de réglage (5), tous les dispositifs de réglage (5) étant reliés entre eux, dans la position de travail, de façon à ce qu'ils puissent être réglés conjointement par l'intermédiaire d'une pièce de réglage dans la position de travail.
